# EUROPÄISCHE PATENTANMELDUNG

(11) **EP 3 778 292 A1**
(43) Veröffentlichungstag der Anmeldung: **17.02.2021**
(21) Anmeldenummer: 20189806.1
(22) Anmeldetag: 06.08.2020
(51) Int. Cl.: B60L 53/63, F03D 7/02

(54) **VERFAHREN ZUM BETREIBEN EINER LADESTATION FÜR ELEKTROFAHRZEUGE UND LADESTATION**

(30) Priorität: 14.08.2019 DE 102019121848
(71) Anmelder: Wobben Properties GmbH, 26607 Aurich (DE)
(72) Erfinder: Brombach, Johannes, 13437 Berlin (DE)
(74) Vertreter: Eisenführ Speiser

(57) **Zusammenfassung**

Die Erfindung betrifft ein Verfahren zum Betreiben einer Ladestation (211, 221, 300) zum Laden von Elektrofahrzeugen (304), wobei die Ladestation (211, 221, 300) an einem Netzverknüpfungspunkt (212, 222, 312) an ein elektrisches Versorgungsnetz (200, 314) angeschlossen ist, das elektrische Versorgungnetz (200, 314) wenigstens ein Verteilnetz (210, 220) und wenigstens einen hierarchisch über dem Verteilnetz (210, 220) liegenden höheren Netzabschnitt (202) aufweist, und der Netzverknüpfungspunkt (212, 222, 312) an das Verteilnetz (210, 220) angeschlossen ist, wobei die Ladestation (211, 221, 300) als Bezugsleistung aus dem elektrischen Versorgungsnetz (200, 314) elektrische Leistung bezieht, die Bezugsleistung an dem Netzverknüpfungspunkt (212, 222, 312) in ihrer Höhe durch eine anfängliche Entnahmebegrenzung auf eine anfängliche Leistungsgrenze begrenzt ist, um eine Übertragungsleistung, die in wenigstens einem Netzzweig des elektrischen Versorgungsnetzes (200, 314) übertragen wird, zu begrenzen, und die Bezugsleistung bei Bedarf über die anfängliche Entnahmebegrenzung erhöht wird, wenn die Begrenzung der Übertragungsleistung in dem wenigstens einen Netzzweig gewährleistet ist.

## Beschreibung

Die vorliegende Erfindung betrifft ein Verfahren zum Betreiben einer Ladestation zum Laden von Elektrofahrzeugen. Die Erfindung betrifft auch eine Ladestation zum Laden von Elektrofahrzeugen.

Eine Ladestation zum Laden von Elektrofahrzeugen kann auch als Elektrotankstelle oder Tankstelle für Elektrofahrzeuge bezeichnet werden. Somit kommen Elektrofahrzeuge zu einer solchen Ladestation, um mit Strom geladen zu werden. Dafür wird eine gewisse Leistung benötigt, die auch je nach Ladezustand und/oder je nach Steuerung des Ladens variieren kann. Werden mehrere Fahrzeuge gleichzeitig geladen, nämlich an jeweils einem Ladeterminal der Ladestation, so benötigen diese ebenfalls elektrische Leistung zum Laden. Die Summe all dieser Ladeleistungen bildet eine Gesamtladeleistung, die die Ladestation somit insgesamt bereitstellen muss.

Zur elektrischen Versorgung der Ladestation kann elektrische Leistung aus einem elektrischen Versorgungsnetz bezogen werden. Die Ladestation ist dafür an einem Netzverknüpfungspunkt an das elektrische Versorgungnetz angeschlossen. Sofern kein Zwischenspeicher in der Ladestation vorhanden ist, muss die Ladestation die jeweilige Gesamtladeleistung über den Netzverknüpfungspunkt aus dem elektrischen Versorgungsnetz beziehen.

Bei Nutzungsspitzen, bei denen besonders viele Elektrofahrzeuge in der Ladestation geladen werden sollen, die Elektrofahrzeuge besonders schnell geladen werden sollen und/oder besonders viele Elektrofahrzeuge mit hoher Ladeleistung geladen werden sollen, kann der Netzverknüpfungspunkt bzw. das elektrische Versorgungsnetz an seine Auslegungsgrenze hinsichtlich an die Ladestation zu liefernder Leistung kommen.

Diese Auslegungsgrenze des Netzverknüpfungspunktes kann die Gesamtladeleistung begrenzen und ggf. dazu führen, dass Elektrofahrzeuge der Ladestation nur noch langsamer geladen werden können. Das Problem kann dadurch entschärft werden, dass eine solche Begrenzung der Ladeleistung möglichst gleichmäßig auf alle gerade zu ladenden Elektrofahrzeuge umverteilt wird. Gelöst ist das Problem dadurch jedoch nicht.

Zur temporären Erhöhung der Ladeleistung kann ein Zwischenspeicher in der Ladestation vorgesehen sein. Ein solcher Zwischenspeicher kann bei geringem Bedarf an Ladeleistung aufgeladen werden und bei hohem Bedarf einen Teil der Gesamtladeleistung bereitstellen. Die Gesamtladeleistung setzt sich dann zusammen aus der Netzleistung, die die Ladestation am Netzverknüpfungspunkt aus dem elektrischen Versorgungsnetz entnimmt, und der Leistung, die der Zwischenspeicher abgibt.

Eine solche Lösung ist grundsätzlich zweckmäßig, weil eine Ladestation selten 24 Stunden am Tag maximale Ladeleistung liefern muss, die Lösung ist allerdings auch sehr kostspielig, weil ausreichend große Zwischenspeicher teuer sind und zudem regelmäßig gewartet und gelegentlich auch ausgetauscht werden müssen.

Der Erfindung liegt somit die Aufgabe zugrunde, zumindest eine der oben genannten Probleme zu adressieren. Insbesondere soll eine Lösung vorgeschlagen werden, bei der eine Ladestation möglichst viel Ladeleistung bei möglichst geringen Kosten bereitstellen kann. Zumindest soll zu bisher bekannten Lösungen eine alternative Lösung vorgeschlagen werden.

Erfindungsgemäß wird ein Verfahren gemäß Anspruch 1 vorgeschlagen. Das Verfahren betrifft somit das Betreiben einer Ladestation zum Laden von Elektrofahrzeugen, wobei die Ladestation an einem Netzverknüpfungspunkt an ein elektrisches Versorgungsnetz angeschlossen ist. Das elektrische Versorgungnetz weist wenigstens ein Verteilnetz und wenigstens einen hierarchisch über dem Verteilnetz liegenden höheren Netzabschnitt auf. Der Netzverknüpfungspunkt ist hierbei an das Verteilnetz angeschlossen. Das wenigstens eine Verteilnetz kann beispielweise ein Niederspannungsnetz oder Mittelspannungsnetz sein und dazu können weitere Verteilnetze vorhanden sein, die ebenfalls Niederspannungsnetzwerke oder Mittelspannungsnetzwerke sind.

Diesem einen oder diesen mehreren Verteilnetzen ist ein höherer Netzabschnitt zugeordnet, der besonders auch ein höheres Spannungsniveau als die Verteilnetze aufweisen kann. Sind die Verteilnetze Niederspannungsnetze, so kann der höhere Netzabschnitt insbesondere ein Mittelspannungsnetz bzw. Mittelspannungsnetzabschnitt sein. Sind die Verteilnetze bereits Mittelspannungsnetze, so kann der höhere Netzabschnitt ein Hochspannungsnetz sein, an das die Verteilnetze angeschlossen sind.

Ausgehend von dieser Netztopologie ist die Ladestation also über ihren Netzverknüpfungspunkt an das Verteilnetz angeschlossen und bezieht darüber als Bezugsleistung aus dem elektrischen Versorgungsnetz elektrische Leistung. Die Bezugsleistung an dem Netzverknüpfungspunkt ist in ihrer Höhe durch eine anfängliche Entnahmebegrenzung auf eine anfängliche Leistungsgrenze begrenzt. Der Grund für diese Begrenzung der Bezugsleistung ist, dass eine Übertragungsleistung, die in wenigstens einem Netzzweig des elektrischen Versorgungsnetzes übertragen wird, zu begrenzen ist.

Hierfür wird vorgeschlagen, dass die Bezugsleistung bei Bedarf über die anfängliche Entnahmebegrenzung erhöht wird, wenn die Begrenzung der Übertragungsleistung in dem wenigstens einen Netzzweig gewährleistet ist. Der Netzzweig kann dann Teil des höheren Netzabschnitts sein, oder der Netzzweig kann einem Übertragungsknoten entsprechen. Der Übertragungsknoten kann ein Übertragungsknoten vom Verteilnetz zum höheren Netzabschnitt sein.

Dem liegt die Erkenntnis zugrunde, dass es auch möglich ist, die Bezugsleistung an dem Netzverknüpfungspunkt zu erhöhen, ohne dass eine Übertragungsleistung, die dadurch eigentlich begrenzt werden soll, erhöht wird, zumindest ohne dass diese über eine für sie vorgesehene Grenze erhöht wird. Hier liegt nämlich die Situation zugrunde, dass die Begrenzung der Bezugsleistung dazu vorgesehen ist, die Übertragungsleistung zu begrenzen. Die Bezugsleistung soll also nicht über ihre Grenze, nämlich die anfängliche Leistungsgrenze, erhöht werden, weil dabei vermutet wird, dass die Übertragungsleistung in der Konsequenz über ihre Grenze erhöht wird. Dabei wird davon ausgegangen, dass zum Bereitstellen der Bezugsleistung auch an anderer Stelle in dem elektrischen Versorgungsnetz eine entsprechende Leistung übertragen werden muss, nämlich die Übertragungsleistung, bzw. ein Teil der Übertragungsleistung. Die Annahme war also, dass die Erhöhung der Bezugsleistung damit zwangsläufig zu einer Erhöhung der Übertragungsleistung führt und auch, dass beim Überschreiten der Grenze für die Bezugsleistung die Folge ein Überschreiten einer Grenze der Übertragungsleistung ist.

Hier wurde nun aber erkannt, dass ein solcher Zusammenhang nicht gelten muss, jedenfalls dann nicht, wenn der Netzverknüpfungspunkt an das Verteilnetz angeschlossen ist, dem wenigstens ein höherer Netzabschnitt überlagert ist. In diesem Fall kommt nämlich im Betracht, dass die Bezugsleistung oder ein Teil davon anderweitig als über die genannte und begrenzte Übertragungsleistung bereitgestellt werden kann. Wird also eine angepasste Bereitstellung der Bezugsleistung durchgeführt, so kann die Bezugsleistung über die anfängliche Entnahmebegrenzung erhöht werden, ohne dass die begrenzte Übertragungsleistung ihre Grenze überschreitet. Die Begrenzung der Übertragungsleistung in dem wenigstens einen Netzzweig kann also trotzdem gewährleistet werden.

Auf diese Art und Weise kann somit die Bezugsleistung der Ladestation erhöht werden, indem die vorhandene Netztopologie entsprechend ausgenutzt wird. Damit kann auch eine Ladeleistung der Ladestation entsprechend erhöht werden, ohne dass ein Zwischenspeicher in der Ladestation nötig wäre, der natürlich trotzdem ergänzend vorgesehen sein könnte.

Es wurde erkannt, dass das Problem vorliegen kann, dass eine geforderte Leistungsbegrenzung oftmals nicht erforderlich ist bzw. ihr Zweck anderweitig erreicht werden kann. Der Zweck ist der Schutz eines Netzzweiges vor einer zu hohen Übertragungsleistung. Es wurde erkannt, dass ein solcher Schutz oftmals anderweitig erreicht werden kann, nämlich besonders, wenn Leistung von einem Einspeiser in der Nähe erhalten wird, und die Leistung nicht den Netzzweig passieren muss. Gemäß einem Aspekt wird somit die anfängliche Entnahmebegrenzung von extern empfangen, insbesondere wird sie durch einen Netzbetreiber vorgegeben.

Gemäß einer Ausführungsform wird vorgeschlagen, dass die Bezugsleistung bei Bedarf über die anfängliche Entnahmebegrenzung erhöht wird, wenn die Begrenzung der Übertragungsleistung in dem wenigstens einen Netzzweig durch eine Leistungsumverteilung im elektrischen Versorgungsnetz erreicht werden kann, oder wenn die Übertragungsleistung in dem wenigstens einen Netzzweig durch diese oder eine andere Leistungsumverteilung im elektrischen Versorgungsnetz verringert werden kann. Es können auch beide Varianten zugleich auftreten.

Eine Leistungsumverteilung kann dadurch erreicht werden, dass in dem wenigstens einen Netzzweig eine Einspeisung erfolgt. Beispielsweise kann an dem einen Netzzweig eine Windenergieanlage angeschlossen sein und Leistung unmittelbar in diesen Netzzweig einspeisen, wenn ausreichend Wind vorhanden ist. Diese Einspeisung kann dann zu einer Leistungsumverteilung führen, nämlich in dem Sinne, dass die Bezugsleistung zumindest teilweise unmittelbar aus dieser in den Netzzweig eingespeisten Leistung genommen werden kann. Die Übertragungsleistung braucht somit nicht mehr vollständig über einen Übergabepunkt zu einem anderen Netzzweig oder zu dem höheren Netzabschnitt übertragen zu werden, weil ein Teil unmittelbar von dem Einspeiser, also der beispielhaft genannten Windenergieanlage, stammt.

Insoweit erfolgt eine Umverteilung von Leistung. Die Übertragungsleistung in dem wenigstens einen Netzzweig wird dadurch verringert, weil ein Teil der Leistung nun aus dem genannten Einspeiser stammt. Die Bezugsleistung kann somit um diesen Teil der Leistung, der unmittelbar von dem Einspeiser stammt, erhöht werden, ohne dass die Übertragungsleistung ihre Begrenzung überschreitet.

Außerdem oder alternativ kommt auch in Betracht, dass eine Umverteilung der Leistung so erfolgt, dass die Topologie des elektrischen Versorgungsnetzes, besonders des wenigstens einen Netzzweigs und ggf. auch des höheren Netzabschnitts verändert wird. Es kann z.B. temporär eine Verbindungsleitung oder ein Verbindungszweig zwischen dem wenigstens einen Netzzweig und dem höheren Netzabschnitt geschaltet werden. Dann kann darüber ein Teil der Bezugsleistung zugeführt werden und um diesen Teil wird die Übertragungsleistung verringert und könnte somit entsprechend um diesen Wert auch wieder erhöht werden, ohne ihre Begrenzung zu überschreiten. Auch das ist eine Leistungsumverteilung.

Durch solche Maßnahmen kann somit die Übertragungsleistung verringert werden, wodurch die Bezugsleistung erhöht werden kann. Die Umverteilung kann aber auch so, insbesondere so genau erfolgen, dass die Übertragungsleistung an ihrer Grenze bleibt und jeweils nur eine weitere Erhöhung der Bezugsleistung über diese Umverteilung befriedigt wird.

Gemäß einer weiteren Ausgestaltung wird vorgeschlagen, dass die Bezugsleistung bei Bedarf über die anfängliche Entnahmebegrenzung erhöht wird, wenn in einem Lastflusspfad zur Ladestation wenigstens ein regenerativer Einspeiser Leistung einspeist, wobei insbesondere die Bezugsleistung in Abhängigkeit der in dem Lastflusspfad eingespeisten Leistung erhöht wird. Ein solcher Lastflusspfad kann von dem höheren Netzabschnitt oder einem Übertragungsknoten zur Ladestation verlaufen. Der Übertragungsknoten kann ein Übertragungsknoten zum höheren Netzabschnitt sein. Es wurde bereits beschrieben, dass das eine Möglichkeit der Leistungsumverteilung sein kann. Hier wird besonders vorgeschlagen, dass in einem Lastflusspfad vom Übertragungsnetz zur Ladestation wenigstens ein regenerativer Einspeiser, insbesondere eine Windenergieanlage oder ein Windpark, angeschlossen ist. Die anfängliche Begrenzung der Bezugsleistung, also die anfängliche Entnahmebegrenzung, kann auf eine anfängliche Leistungsgrenze begrenzt werden, die einzuhalten ist, wenn der regenerative Einspeiser, insbesondere also die Windenergieanlage oder der Windpark, keine Leistung einspeist. Im Rahmen dieser Entnahmebegrenzung kann die Ladestation also in jedem Fall, jedenfalls unabhängig von diesem regenerativen Einspeiser, betrieben werden.

Ist aber ausreichend Wind vorhanden, dass die Windenergieanlage bzw. der Windpark elektrische Leistung aus Wind erzeugt, so kann diese zusätzlich der Ladestation bereitgestellt werden und um diesen Wert kann die Bezugsleistung über ihre anfängliche Entnahmebegrenzung erhöht werden. Der regenerative Einspeiser muss aber nicht seine Leistung oder seine gesamte Leistung der Ladestation bereitstellen, sondern er kann diese auch unabhängig von der Ladestation in das elektrische Versorgungsnetz einspeisen. Es wird hier nur die lokale Nähe zwischen dem regenerativen Einspeiser und der Ladestation ausgenutzt, um gelegentlich die anfängliche Entnahmebegrenzung überschreiten zu können.

Als regenerative Einspeiser können auch mehrere Anlagen vorhanden sein, insbesondere ein Windpark und eine Photovoltaikanlage. Durch eine solche Konstellation ist die Wahrscheinlichkeit sehr viel höher, dass zumindest einer der regenerativen Einspeiser elektrische Leistung erzeugt und in den Lastflusspfad einspeist. Dadurch kann dann häufig die Bezugsleistung über die anfängliche Entnahmebegrenzung erhöht werden. Besonders in der Annahme, dass ein erhöhter Bedarf an elektrischer Leistung in der Ladestation besonders an Stoßzeiten auftritt und solche Stoßzeiten üblicherweise nicht in der Nacht, sondern am Tage sind, sollte zu solchen Stoßzeiten immer reichlich elektrische Leistung durch wenigstens einen der regenerativen Erzeuger vorhanden sein.

Gemäß einer Ausführungsform wird vorgeschlagen, dass die Bezugsleistung bei Bedarf über die anfängliche Entnahmebegrenzung erhöht wird, wenn in einem Lastflusspfad zur Ladestation wenigstens ein regenerativer Einspeiser Blindleistung einspeist. Ein solcher Lastflusspfad kann von dem höheren Netzabschnitt oder einem Übertragungsknoten zur Ladestation verlaufen. Der Übertragungsknoten kann ein Übertragungsknoten zum höheren Netzabschnitt sein. Insbesondere wird vorgeschlagen, dass hierbei die Bezugsleistung in Abhängigkeit der in dem Lastflusspfad eingespeisten Blindleistung erhöht wird.

Hier wurde besonders erkannt, dass durch diese Blindleistungseinspeisung des regenerativen Einspeisers, der der nämlich somit in der Nähe der Ladestation diese Blindleistung einspeist, Spannungsprofile beeinflusst werden können. Dadurch wiederum kann ein Leistungsfluss zumindest teilweise gesteuert werden. Besonders kommt in Betracht, dass umso mehr Leistung übertragen werden kann, umso stärker in dem Lastflusspfad die Spannung durch die Blindleistungseinspeisung erhöht wurde. Das kann besonders darin begründet sein, dass durch diese Spannungserhöhung durch die Blindleistungseinspeisung einem Spannungsabfall durch die übertragene Bezugsleistung entgegengewirkt wird. Auch hierdurch könnte eine teilweise Leistungsumverteilung gesteuert werden, wodurch die Begrenzung der Übertragungsleistung in dem wenigstens einen Netzzweig gewährleistet werden kann.

Besonders wurde erkannt, dass eine Leistungsentnahme der Ladestation oberhalb der anfänglichen Entnahmegrenze zu einem so starken Spannungseinbruch führen kann, dass die Spannung in dem Lastflusspfad ein vorgeschriebenes Spannungsband verlässt, besonders unter eine untere Grenze abfällt. Dem kann eine Blindleistungseinspeisung mittels des wenigstens einen regenerativen Erzeugers entgegenwirken bzw. dem vorbeugen. Vorzugsweise speist die Ladestation selbst Blindleistung ein, um einem Spannungsabfall durch überhöhte Leistungsentnahme entgegenzuwirken.

Gemäß einer Ausführungsform wird vorgeschlagen, dass über wenigstens ein Bewertungskriterium geprüft wird, ob die Begrenzung der Übertragungsleistung in dem wenigstens einen Netzzweig gewährleistet ist. Zum Prüfen über das wenigstens eine Bewertungskriterium wird wenigstens eine Bewertungsinformation verwendet, die vorzugsweise auf wenigstens einem der folgenden Wege erhalten werden kann.

Die Bewertungsfunktion kann von einem Netzbetreiber erhalten werden, indem also der Netzbetreiber diese Bewertungsinformation an die Ladestation überträgt. Der Netzbetreiber hat üblicherweise ausreichend Informationen zu Lastflüssen im elektrischen Versorgungsnetz und kann daher beurteilen, ob die relevante Übertragungsleistung in dem wenigstens einen Netzzweig noch unterhalb ihrer Begrenzung liegt. Diese Information kann der Netzbetreiber somit an die Ladestation übertragen.

Die Bewertungsinformation kann auch, ergänzend oder alternativ, aus Messungen erhalten werden. Insbesondere aus Messungen einer vorherrschenden Windgeschwindigkeit und/oder aus Messungen einer vorherrschenden Sonneneinstrahlung. Dies betrifft besonders den Fall, dass ein entsprechender regenerativer Einspeiser, also eine Windenergieanlage bzw. ein Windpark und/oder eine Photovoltaikanlage, in der Nähe der Ladestation einspeist, insbesondere in den Lastflusszweig einspeist. Ist also ein solcher regenerativer Einspeiser der Grund dafür, dass die Bezugsleistung über die anfängliche Entnahmeleistung erhöht werden kann, weil nämlich entsprechende Leistung eines solchen regenerativen Einspeisers unmittelbar der Ladestation zugeführt werden kann, so kann anhand dieser Wetterwerte, also der gemessenen vorherrschenden Windgeschwindigkeit bzw. der gemessenen vorherrschenden Sonneneinstrahlung beurteilt werden, wieviel Leistung zumindest in etwa von diesem regenerativen Erzeuger oder mehreren regenerativen Erzeugern bereitsteht und ohne Erhöhung der Übertragungsleistung abgerufen werden kann.

Außerdem oder alternativ kann die Bewertungsinformation als wenigstens ein Signal von einem benachbarten und/oder an den Lastflusspfad angeschlossenen Windpark erhalten werden. Außerdem oder alternativ kann eine solche Information als wenigstens ein Signal von einer benachbarten und/oder an dem Lastflusspfad angeschlossenen Photovoltaikanlage erhalten werden. Sinnvollerweise liefert ein solcher Windpark eine Information über die vorherrschende Windgeschwindigkeit, wohingegen die Photovoltaikanlage Informationen über die vorherrschende Sonneneinstrahlung liefert. Alternativ können der Windpark und/oder die Photovoltaikanlage auch unmittelbar ihre erzeugbare Leistung als Bewertungsinformation übertragen. Aus wenigstens einer solchen Bewertungsinformation kann dann beurteilt werden, ob mehr Leistung für die Bezugsleistung zur Verfügung steht, als durch die anfängliche Entnahmebegrenzung begrenzt wurde.

Gemäß einer Ausführungsform wird vorgeschlagen, dass, um die Bezugsleistung bei Bedarf über die anfängliche Entnahmebegrenzung zu erhöhen, eine Lastumverteilung im elektrischen Versorgungsnetz durchgeführt oder berücksichtigt wird, bei der von wenigstens einem dezentralen Einspeiser erzeugte Leistung, oder ein Teil davon, der Ladestation über das Verteilnetz zugeführt wird, ohne Übertragung über den höheren Netzabschnitt. Insbesondere erfolgt die Zuführung solcher Leistung oder ein Teil davon von einer Windenergieanlage, einem Windpark und/oder einer Photovoltaikanlage, die jeweils die erzeugte Leistung bereitstellen.

Hier liegt der Gedanke bzw. die Annahme zu Grunde, dass die Übertragungsleistung an einem Übertragungspunkt von dem höheren Netzabschnitt zum Verteilnetz begrenzt ist. Dieser Übertragungspunkt ist also das begrenzende Element. Eine solche Struktur kann häufig vorliegen, weil nämlich ein solcher höherer Netzabschnitt ein Übertragungsnetz sein kann oder eine Verbindung von dem Verteilnetz zu einem Übertragungsnetz bilden kann. Dabei wird üblicherweise davon ausgegangen, dass über das Übertragungsnetz Leistung für die Verbraucher, hier nämlich für die Ladestation, bereitgestellt wird. Die Leistung muss also über diesen Übertragungspunkt übertragen werden.

Die Leistungsaufnahme der Verbraucher dieses Verteilnetzes ist somit begrenzt im Lichte der Begrenzung der Übertragungsleistung, nämlich im Lichte der Begrenzung der Übertragungsfähigkeit dieses Übertragungspunktes. Im einfachsten Fall kann die Ladestation der einzige Verbraucher sein und ihre Bezugsleistung ist dann logischerweise mit ihrer anfänglichen Entnahmebegrenzung auf die Begrenzung der Übertragungsleistung begrenzt. Es kommt nun aber in Betracht, dass an einem solchen Verteilnetz ein regenerativer Einspeiser ergänzt wird, oder dass ein solcher bereits vorhanden war, bei der Begrenzung oder Bezugsleistung aber dennoch nicht berücksichtigt werden könnte, weil er nämlich windabhängig nicht dauerhaft einspeist, seine geringste eingespeiste Leistung also null beträgt. Nun wird aber vorgeschlagen, diesen mit zu berücksichtigen.

Es kommt auch in Betracht, dass mehrere Verteilnetze, insbesondere zumindest zwei benachbarte Verteilnetze untereinander verbunden sind. Speist ein dezentraler Erzeuger in ein benachbartes Verteilnetz ein und kann diese Leistung oder ein Teil davon in das Verteilnetz unmittelbar übertragen werden, an das die Ladestation angeschlossen ist, so kann auch über diesen Weg zusätzliche Leistung der Ladestation zugeführt werden, ohne die Übertragungsleistung zu erhöhen. Dadurch kann die Bezugsleistung also auch über ihre anfängliche Entnahmebegrenzung erhöht werden, ohne dass die Übertragungsleistung an ihre Grenze kommt, denn sie wird dabei nicht erhöht.

Gemäß einer Ausführungsform wird vorgeschlagen, dass die Ladestation ein Erhöhungssignal erzeugt und ausgibt, das einen Wert oder zeitlichen Werteverlauf angibt, um den die Bezugsleistung über die anfängliche Entnahmebegrenzung erhöht werden kann. Hier liegt der Gedanke zu Grunde, dass zusätzlich zu der Prüfung, ob eine Erhöhung der Bezugsleistung über die anfängliche Entnahmebegrenzung überhaupt möglich ist, von der Ladestation auch kommuniziert wird, ob sie eine solche Erhöhung durchgeführt hat oder eine solche Erhöhung durchführen will oder eine solche Erhöhung fortsetzen will. Auch die Art der durchgeführten, geplanten oder weitergeführten Überhöhung kann hier kommuniziert werden.

Das kann besonders dem Netzbetreiber, an den eine solche Information übertragen werden kann, helfen, das elektrische Versorgungsnetz bzw. einen Teil davon zu steuern. Hier liegt auch der Gedanke zu Grunde, dass mehrere Ladestationen vorgesehen sein können, die in ihrer Bezugsleistung begrenzt sind und der Grund für diese Begrenzung der Bezugsleistungen beider Ladestationen zumindest ursprünglich durch dieselbe Übertragungsleistung begründet ist. Kann nun durch eine Umverteilung, Einspeisung eines dezentralen Erzeugers und/oder anderweitig die Bezugsleistung um eine Erhöhungsleistung erhöht werden, so kann das Probleme geben, wenn beide Ladestationen ihre Bezugsleistung um diese Leistungserhöhung erhöhen wollen.

Um das Problem zu lösen, könnte in diesem Fall vorgesehen sein, dass jede der beiden Ladestationen nur ihre Bezugsleistung jeweils um die halbe Erhöhungsleistung erhöhen können oder dürfen. Häufig kommt es aber vor, dass zwei benachbarte Ladestationen nicht zugleich das Bedürfnis haben, ihre Bezugsleistung über die anfängliche Entnahmebegrenzung zu erhöhen. Das kommt besonders dann in Betracht, wenn solche Ladestationen jeweils eine Elektrotankstelle an einer Autobahn auf gleicher Höhe bilden, aber für unterschiedliche Fahrtrichtung. Treten beispielsweise erhöhte Verkehrsströme in Ferienzeiten auf, sind diese regelmäßig nur in eine Richtung zu verzeichnen. Gleiches kann bei Berufsverkehr gelten. Daher wird vorgeschlagen, dass die Ladestationen ihren Bedarf oder ihre Erhöhung kommunizieren. Es wird dann verhindert, dass in dem seltenen Fall, dass doch beide Ladestationen ihre Bezugsleistung über ihre anfängliche Entnahmebegrenzung erhöhen wollen, ein Konflikt erkannt und dadurch vermieden werden kann. Es braucht bei einer solchen Kommunikation keine vorsorgliche Begrenzung auf 50% der insgesamt möglichen Erhöhung implementiert zu werden.

Gemäß einer Ausführungsform wird vorgeschlagen, dass die Ladestation mehrere Ladeterminals aufweist, jedes Ladeterminal zum Laden eines Elektrofahrzeugs vorbereitet ist, jedes Ladeterminal einen Ladeablauf zum Laden eines angeschlossenen Elektrofahrzeugs vorausplant, zumindest einen Teilablauf davon, aus den Ladeabläufen aller Ladeterminals, bzw. dem jeweiligen Teilablauf, ein Bezugsleistungsbedarf ermittelt wird und für den Bezugsleistungsbedarf geprüft wird, ob er die anfängliche Entnahmebegrenzung einhält, oder die Bezugsleistung über die anfängliche Entnahmebegrenzung erhöht werden muss, um den Bezugsleistungsbedarf zu decken.

Hier wurde besonders erkannt, dass Elektrofahrzeuge sehr unterschiedliche Ladekennlinien aufweisen und an einer Ladestation häufig auch unterschiedliche Elektrofahrzeuge zugleich geladen werden, wobei wiederum selten für alle Elektrofahrzeuge der Ladevorgang synchron gestartet wird, sodass die Ladekurven zudem jeweils in unterschiedlichen Stadien sind. Zum Laden eines Elektrofahrzeugs ist jeweils ein Ladeterminal vorgesehen, an das jeweils ein Elektrofahrzeug angeschlossen ist. Ein solches Ladeterminal kann auch eine Ladesäule sein, an einer Ladesäule können aber auch mehrere Ladeterminals ausgebildet sein. Ein Ladeterminal ist besonders die Hardware, die zum Laden des Elektrofahrzeugs benötigt wird.

Wird nun ein Elektrofahrzeug an ein Ladeterminal angeschlossen, wird das Ladeterminal den anstehenden Ablauf des Ladens ermitteln. Dabei kann es den Ladezustand des entsprechenden Elektrofahrzeugs ermitteln, sowie den Typ des Elektrofahrzeugs. Davon abhängig kann dann ermittelt werden, wie im Idealfall ein zeitlicher Verlauf des Ladens des Elektrofahrzeugs ausgestaltet sein wird. Dieser zeitliche Verlauf bildet somit den Ladeablauf. Vorzugsweise wird der Ladeablauf nur zu einem Teil vorausgeplant und ein solcher Teil, also ein zeitlicher Teilabschnitt davon, ist ein Teilablauf.

Es ist besonders vorteilhaft, nur einen Teilablauf vorauszuplanen, denn alle Teilabläufe sollen jeweils zusammen berücksichtigt werden. Ein solcher Teilablauf und damit alle Teilabläufe aller Ladeterminals, können für aktuelle Zeitabschnitte bestimmt werden, z.B. für die kommende Minute oder für die kommenden fünf Minuten oder für die kommende Viertelstunde, also insbesondere für die kommende Zeit im Bereich von 1 Minute bis 15 Minuten. Dadurch können für diesen Zeitbereich von jedem Ladeterminal Teilabläufe bereitgestellt werden. Dies berücksichtigt, dass häufig Elektrofahrzeuge nicht zeitgleich angeschlossen werden, sondern zu unterschiedlichen Zeiten angeschlossen werden, insbesondere zu unterschiedlichen Zeiten ein geladenes Elektrofahrzeug von seinem Ladeterminal getrennt wird und dann ein neues zu ladendes Elektrofahrzeug angeschlossen wird. Die gesamten Ladeabläufe, also der vollständige Ladeprozess eines Elektrofahrzeugs, stimmen daher von einem zum nächsten Terminal üblicherweise zeitlich nicht überein. Durch die Verwendung der Teilabläufe kann das Problem behoben werden. Solche Teilabläufe berücksichtigen dann besonders die zu erwartende Ladecharakteristik. Eventuell kann auch zusätzlich ein Ladewunsch des Elektrofahrzeugs bzw. seines Fahrers berücksichtigt werden.

Aus allen Teilabläufen zusammen kann dann der Bezugsleistungsbedarf ermittelt werden und für den wird geprüft, ob eine Erhöhung der Bezugsleistung über die anfängliche Entnahmebegrenzung notwendig ist und falls ja, in welcher Höhe und für welchen Zeitraum. Davon ausgehend kann dann geprüft werden, ob eine solche Erhöhung ganz oder teilweise möglich ist.

Erfindungsgemäß wird auch eine Ladestation zum Laden von Elektrofahrzeugen vorgeschlagen, wobei
- die Ladestation mehrere Ladeterminals aufweist,
- jedes Ladeterminal zum Laden eines Elektrofahrzeugs vorbereitet ist,
- jedes Ladeterminal einen Ladeablauf zum Laden eines angeschlossenen Elektrofahrzeugs vorausplant, zumindest einen Teilablauf davon,
- aus den Ladeabläufen aller Ladeterminals, bzw. dem jeweiligen Teilablauf, ein Bezugsleistungsbedarf ermittelt wird und
- für den Bezugsleistungsbedarf geprüft wird, ob er die anfängliche Entnahmebegrenzung einhält, oder die Bezugsleistung über die anfängliche Entnahmebegrenzung erhöht werden muss, um den Bezugsleistungsbedarf zu decken.

Eine solche Steuerungseinrichtung kann eine Entnahmevorrichtung, wie beispielsweise einen aktiven Gleichrichter, der Teil der Ladestation sein kann, so steuern, dass die Bezugsleistung bei Bedarf über die anfängliche Entnahmebegrenzung erhöht wird, wenn die Begrenzung der Übertragungsleistung in dem wenigstens einen Netzzweig gewährleistet ist. Dazu kann die Steuerungseinrichtung entsprechende Informationen verarbeiten und beispielsweise der Entnahmeeinrichtung, besonders dem aktiven Gleichrichter, einen entsprechenden Leistungssollwert vorgeben.

Es kommt aber auch in Betracht, dass die Steuerungseinrichtung sämtliche Ladeterminals, an denen jeweils ein Elektrofahrzeug geladen werden kann, steuert, zumindest überwacht, so dass die maximale Leistungsaufnahme der Ladestation einen entsprechenden Maximalwert der Bezugsleistung nicht überschreitet. Die Steuerungseinrichtung überwacht dann also, dass die Summe aller Ladeleistungen der Ladeterminals diese neue höhere Grenze der Bezugsleistung nicht überschrieben. Besonders kann vorgesehen sein, dass bei einer Erhöhung der Bezugsleistung dafür eine neue Grenze als erhöhte Entnahmebegrenzung vorgegeben wird und diese erhöhte Entnahmebegrenzung anteilig auf die Ladeterminals als Begrenzung verteilt wird.

Vorzugsweise übt die Steuerungseinrichtung nur eine Überwachung aller Ladeterminals aus. Das kann so durchgeführt werden, dass grundsätzlich alle Ladeterminals das jeweils angeschlossene Fahrzeug mit so viel Leistung laden dürfen, wie von dem entsprechenden Elektrofahrzeug in dem Moment angefragt wird. Aus der Summe ergibt sich dann die Bezugsleistung und für die wird dann überprüft, ob sie die anfängliche Entnahmebegrenzung einhält. Hält sie die anfängliche Entnahmebegrenzung nicht ein, wird überprüft, ob sie zu einer Erhöhung der Bezugsleistung führt, bei der aber die Begrenzung der Übertragungsleistung in dem wenigstens einen Netzzweig noch gewährleistet ist. Ist das nicht möglich, oder nicht in der notwendigen Höhe möglich, kann die Steuerungseinrichtung den Terminals eine entsprechende Grenze vorgeben.

Vorzugsweise ist die Ladestation, insbesondere die Steuerungseinrichtung, dazu vorbereitet, wenigstens ein Verfahren zum Betreiben einer Ladestation gemäß wenigstens einer vorstehend beschriebenen Ausführungsform auszuführen. Insbesondere wird auch vorgeschlagen, dass die Ladestation so ausgestaltet ist, wie im Zusammenhang mit einem Verfahren gemäß wenigstens einer vorstehend beschriebenen Ausführungsform erläutert wurde. Insbesondere weist die Ladestation die beschriebenen Ladeterminals auf.

Vorzugsweise weist die Ladestation auch eine Kommunikationseinrichtung auf, um Informationen zu empfangen und/oder zu übertragen, insbesondere zu einem Netzbetreiber zu übertragen und/oder von einem Netzbetreiber zu empfangen und/oder Informationen mit einer weiteren Ladestation auszutauschen.

Die Ladestation kann besonders dadurch dazu eingerichtet sein, ein Verfahren gemäß wenigstens einer vorstehend beschriebenen Ausführungsform auszuführen, dass ein solches Verfahren in der Steuerungseinrichtung implementiert ist. Insbesondere kann die Steuerungseinrichtung einen Prozessrechner aufweisen, in dem ein solches Verfahren programmiert ist.

Die Erfindung wird nun nachfolgend anhand von Ausführungsformen beispielhaft unter Bezugnahme auf die begleitenden Figuren näher beschrieben.
- Figur 1: zeigt eine Windenergieanlage in einer perspektivischen Darstellung.
- Figur 2: zeigt einen Ausschnitt eines elektrischen Versorgungsnetzes in einer schematischen Darstellung.
- Figur 3: zeigt eine Ladestation in einer schematischen Darstellung.

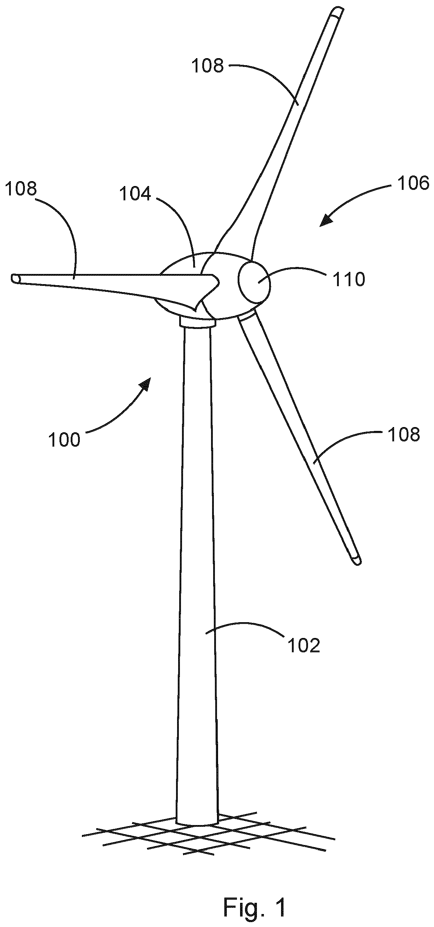

Figur 1 zeigt eine Windenergieanlage 100 mit einem Turm 102 und einer Gondel 104. An der Gondel 104 ist ein Rotor 106 mit drei Rotorblättern 108 und einem Spinner 110 angeordnet. Der Rotor 106 wird im Betrieb durch den Wind in eine Drehbewegung versetzt und treibt dadurch einen Generator in der Gondel 104 an.

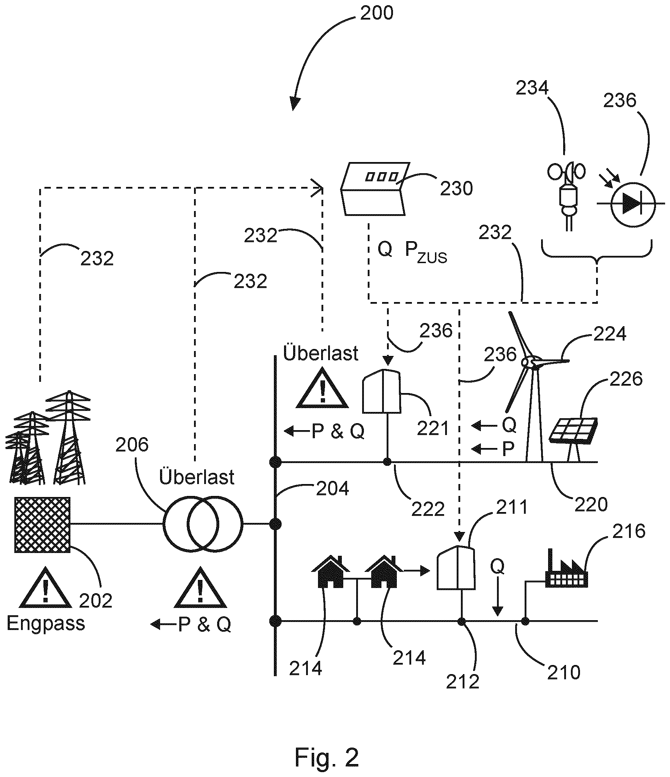

Figur 2 zeigt einen Ausschnitt eines elektrischen Versorgungsnetzes 200, das ein erstes Verteilnetz 210 und ein zweites Verteilnetz 220 sowie einen hierarchisch über diesen beiden Verteilnetzen liegenden höheren Netzabschnitt 202 aufweist. Die beiden Verteilnetze 210 und 220 sind über eine Sammelschiene 204 und einen Transformator 206 an dem höheren Netzabschnitt 202 angeschlossen. Der Transformator 206 transformiert von einer höheren Spannung in dem höheren Netzabschnitt 202 auf eine niedrigere Spannung in den Verteilnetzen 210 und 220. An jedes Verteilnetz 210 und 220 ist zudem jeweils eine Ladestation 211 bzw. 221 angeschlossen, nämlich jeweils über einen Netzverknüpfungspunkt 212 bzw. 222.

An dem ersten Verteilnetz 210 sind zudem weitere Verbraucher bzw. Lasten angeschlossen, nämlich zwei exemplarisch dargestellte Haushalte 214, die natürlich unterschiedlich sein können, und eine Industrieanlage 216, wie beispielsweise eine Fabrik. Dies dient der Veranschaulichung und es können auch weitere Verbraucher bzw. Lasten als auch andere Elemente angeschlossen sein.

Ebenfalls zum Zwecke der Erläuterung sind an das zweite Verteilnetz 220 dezentrale Einspeiser angeschlossen, nämlich eine Windenergieanlage 224 und eine Photovoltaikanlage 226.

Hier wurde nun berücksichtigt, dass Ladestationen einen stark schwankenden Leistungsbedarf haben können. Eine dauerhafte Auslegung eines Netzverknüpfungspunktes auf den maximalen Leistungsbedarf kann wirtschaftlich unter Umständen nicht sinnvoll sein. Hier wurde nun erkannt, dass im Lastflusspfad vom Übertragungsnetz zur Ladestation regenerative Einspeiser vorhanden sein können und eine Überlast verursachen können. In diesem Fall kann eine zusätzliche Last entlastend wirken und einen Engpass vermeiden helfen.

Das soll besonders an dem zweiten Verteilnetz 220 verdeutlicht werden, das hier auch repräsentativ für einen Lastflusspfad steht, nämlich einer der von der Sammelschiene 204 bis zur Photovoltaikanlage 226 reicht. Speisen diese beiden regenerativen Erzeuger, also die Windenergieanlage 224 und/oder die Photovoltaikanlage 226 ein, so kann das als eine Überlast verstanden werden, weil nämlich mehr Leistung in das zweite Verteilnetz 220 eingespeist wird, als in den höheren Netzabschnitt 202 übertragen werden kann. Erhöht die Ladestation 221 ihren Leistungsbedarf, wirkt das wie eine zusätzliche Last und kann entsprechend zusätzliche Leistung, die durch die Windenergieanlage 224 und/oder die Photovoltaikanlage 226 erzeugt und eingespeist wurde, aufnehmen. Die Windenergieanlage 224 als auch die Photovoltaikanlage 226 stehen insoweit jeweils auch repräsentativ für weitere solche oder andere regenerative oder zumindest dezentrale Einspeiser. Besonders kann die Windenergieanlage 224 auch repräsentativ für einen Windpark stehen.

Erfindungsgemäß wurde erkannt, dass diese Topologie auch dazu genutzt werden kann, dass die Ladestation 221 ihre Bezugsleistung über eine anfängliche Entnahmebegrenzung bzw. über die anfängliche Leistungsgrenze erhöhen kann. Das ist dann möglich, wenn ein Teil der Bezugsleistung von der Windenergieanlage 224 und/oder der Photovoltaikanlage 226 erzeugt wird. Dadurch kann dann gewährleistet werden, dass eine Begrenzung einer Übertragungsleistung, nämlich besonders in dem Transformator 206 und/oder in der Sammelschiene 204, eingehalten wird.

Dadurch kann auch erreicht werden, dass die Netzanschlussleistung der Ladestation 221 erhöht werden kann, wenn diese entlastend wirkt, zumindest keine zu hohe Last verursacht. Die Netzanschlussleistung kann insoweit eine anfängliche Entnahmebegrenzung für die Bezugsleistung der Ladestation 221 bilden. Somit kann in dem beschriebenen Fall die Bezugsleitung über diese anfängliche Entnahmebegrenzung und damit über die Netzanschlussleistung erhöht werden.

Somit wird vorgeschlagen, eine zusätzliche Netzanschlussleistung in Abhängigkeit der regenerativen Einspeiseleistung im Lastflusspfad, hier also im zweiten Verteilnetz 220, freizugeben. Die anfängliche Leistungsgrenze für die Bezugsleistung der Ladestation 221 kann also in Abhängigkeit von der regenerativen Einspeiseleistung im Lastflusspfad erhöht werden. Somit wird ein Einspeisefolgebetrieb vorgeschlagen, bei dem nämlich die Last bzw. maximale Last der Ladestation der Einspeisung der regenerativen bzw. dezentralen Einspeiser folgt.

Als weitere Möglichkeit wird vorgeschlagen, eine zusätzliche Netzanschlussleistung in Abhängigkeit einer Blindleistungsbelastung im Lastflusspfad freizugeben. Somit wird ein Blindleistungsfolgebetrieb vorgeschlagen, der eine zusätzliche Last erlaubt, also die Erhöhung der Last bzw. maximalen Last erlaubt, wenn Blindleistung ausgeglichen wird.

Kommt es beispielsweise an einem Mittelspannungsstrang, den das zweite Verteilnetz bilden kann, aufgrund einer hohen Einspeiseleistung einer Photovoltaikanlage und/oder einer Windenergieanlage oder eines Windparks zu einer Überlastung, und befindet sich an dem Mittelspannungsstrang auch eine Ladestation, kann dieser in Abhängigkeit der regenerativen Einspeisung eine höhere Anschlussleistung zugeordnet werden. Diese hohe Einspeisung regenerativer Erzeuger kann beispielsweise durch die Windenergieanlage 224 und/oder die Photovoltaikanlage 226 erfolgen.

Zur Steuerung kann ein etwaiger Engpass bzw. ein Überangebot an Leistung von Photovoltaikanlagen und/oder Windenergieanlagen, durch einen Netzbetreiber bestimmt werden und als Information an die Ladestation gesendet werden. Es kommt aber auch in Betracht, alternativ oder ergänzend, dass die Ladestation über Sensoren verfügt, die Windverhältnisse und/oder Sonneneinstrahlung erkennen können. Davon abhängig kann eine solche Ladestation dann selbständig mit einer zusätzlichen Anschlussleistung einer ungefähren Einspeisung folgen, also einer Einspeisung, die aus den erfassten Daten über die Windverhältnisse und die Sonneneinstrahlung abgeschätzt werden kann.

Besonders kommt in Betracht, dass der Transformator 206, der somit auch als Übertragungsknoten zwischen dem höheren Netzabschnitt 202 und der Sammelschiene 204 bzw. damit den beiden Verteilnetzen 210 und 220 dient, eine Engstelle bildet. Auf diese Engstelle ist grundsätzlich die Anschlussleistung der Ladestationen 221 und 212 ausgelegt. Die Netzanschlussleistung ist somit die anfängliche Entnahmebegrenzung der Bezugsleistung der jeweiligen Ladestation. Diese anfängliche Entnahmebegrenzung soll nicht erhöht werden, weil andernfalls eine Begrenzung der Übertragungsleistung an dem Transformator 206, also an dem Übertragungsknoten dort überschritten werden könnte. Es wurde nun aber erkannt, dass unter Berücksichtigung zumindest einiger dezentraler Einspeiser, besonders regenerativer Einspeiser wie der Windenergieanlage 224 und der Photovoltaikanlage 226, ein Teil der Leistung von dort stammen kann und um diesen Teil die Bezugsleistung der Ladestation, nämlich besonders der Ladestation 221, über ihre anfängliche Entnahmebegrenzung erhöht werden kann.

Insoweit kann eine Erhöhung der Bezugsleistung über ihre anfängliche Entnahmebegrenzung durch eine Umverteilung erfolgen. Statt also die gesamte Leistung aus dem höheren Netzabschnitt 202 über den Transformator 206 und damit den Übertragungsknoten zu beziehen, wird die Leistungszuführung insoweit teilweise umverteilt, als dass ein Teil der Leistung nun von der Windenergieanlage 224 und/oder der Photovoltaikanlage 226 bezogen wird.

Eine andere Möglichkeit der Leistungsumverteilung kann auch darin bestehen, dass ein Verbraucher bzw. eine Last weniger Leistung erhält und diese Leistung stattdessen einer Ladestation zugutekommen kann. Das soll mit dem ersten Verteilnetz 210 verdeutlicht werden. Verringert beispielsweise die Industrieanlage 216 ihre Leistungsaufnahme, weil sie beispielsweise im Sommer weniger Heizleistung benötigt, aus technischen Gründen weniger Leistung benötigt, oder beispielsweise nicht 24 Stunden am Tag und 7 Tage die Woche läuft, so kann diese Leistung der Ladestation 212 zugutekommen. Die Ladestation 212 kann dann ihre Bezugsleistung um diese Leistung, die die Industrieanlage 216 nicht abruft, erhöht werden.

Eine weitere Möglichkeit besteht darin, dass das erste Verteilnetz 210 zusätzliche Leistung aus dem zweiten Verteilnetz 220 erhält, die nicht über den Transformator 206 geführt wird und somit keine zusätzliche Belastung des Transformators 206 zur Folge hat. Insoweit erfolgt dann eine Umverteilung der Leistung derart, dass nur ein Teil der von der Ladestation 211 benötigten Leistung aus dem höheren Netzabschnitt 202 bezogen wird. Ein anderer Teil der Leistung wird aus dem zweiten Verteilnetz 220 bezogen, nämlich von den dort gezeigten regenerativen Einspeisern, also von der Windenergieanlage 224 und der Photovoltaikanlage 226.

Eine Umverteilung kann aber auch so erfolgen, dass tatsächlich eine Topologie geändert wird, indem beispielsweise eine Querverbindung zwischen dem ersten Verteilnetz 210 und dem zweiten Verteilnetz 220 gebildet wird. Das ist in Figur 2 nicht dargestellt, könnte aber beispielsweise im Bereich der Photovoltaikanlage 226 einerseits und der industriellen Anlage 216 andererseits durchgeführt werden, indem dort eine Querverbindung installiert und geschaltet wird.

Zur Steuerung der beschriebenen Verfahren wird besonders eine Netzbetriebsführung 230 vorgeschlagen. Eine solche Netzbetriebsführung kann entsprechende Informationen sammeln, die zum Durchführen des Verfahrens notwendig sind, insbesondere Informationen die notwendig sind, um beurteilen zu können, ob die Bezugsleistung der Ladestationen über ihre anfängliche Entnahmebegrenzung erhöht werden können, ohne dass eine Übertragungsleistung eine Begrenzung überschreitet. Dafür kann eine solche Netzbetriebsführung 230 Informationen aus dem höheren Netzabschnitt 202 und auch dem Transformator 206, nämlich dem Übertragungsknoten, erhalten. Sie kann auch Informationen aus den Verteilnetzen erhalten, besonders aus dem zweiten Verteilnetz 220 darüber, ob dort eine Überlast vorliegen könnte. Durch gestrichelte Linien sind entsprechende Informationspfade 232 angedeutet. Nicht alle möglichen Informationspfade sind dargestellt. Beispielsweise kommt auch in Betracht, Informationen von den regenerativen Einspeisern, also der exemplarisch gezeigten Windenergieanlage 224 und der exemplarisch gezeigten Photovoltaikanlage 226 zu erhalten. Stattdessen ist dazu eine Variante verdeutlicht, demnach die Netzbetriebsführung 230 Informationen von einem symbolisch dargestellten Windsensor 234 und einem Strahlungsmesser 236 erhält.

Davon abhängig kann eine Erhöhung der anfänglichen Entnahmebegrenzung über jeweils einen ebenfalls gestrichelt dargestellten Steuerpfad 238 gesteuert werden. Darüber kann auch eine einzuspeisende Blindleistung oder zusätzlich einzuspeisende Blindleistung bzw. von der Ladestation abzunehmende Blindleistung vorgegeben werden.

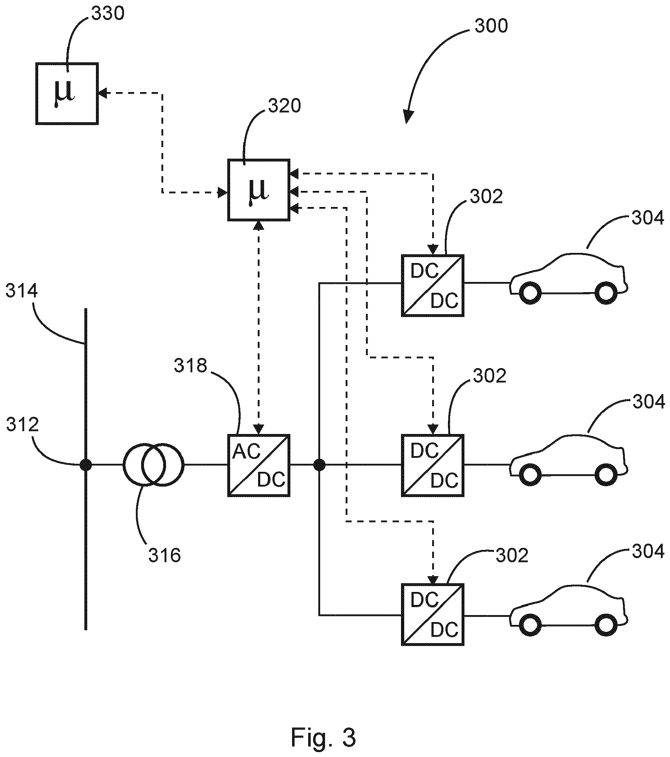

Figur 3 zeigt in einer schematischen Darstellung eine Ladestation 300 mit exemplarisch drei Ladeterminals 302, an die jeweils ein Elektrofahrzeug 304 angeschlossen ist. Die Elektrofahrzeuge können natürlich unterschiedlich sein.

Zur Versorgung der Ladestation 300 ist diese über einen Netzverknüpfungspunkt 312 an ein elektrisches Versorgungsnetz 314 angeschlossen. Das elektrische Versorgungsnetz 314 weist wenigstens ein Verteilnetz und wenigstens einen hierarchisch über dem Verteilnetz liegenden höheren Netzabschnitt auf, was in Figur 3 allerdings nicht gezeigt ist und für diese Netztopologie wird zur Erläuterung auf die Figur 2 verwiesen. Die Ladestation 300 kann beispielsweise der Ladestation 221 der Figur 2 entsprechen, oder der Ladestation 211 der Figur 2.

Zum Laden der Elektrofahrzeuge 304 entnimmt die Ladestation 300 eine Bezugsleistung über den Netzverknüpfungspunkt 312 aus dem elektrischen Versorgungsnetz 314. Das kann über einen Ladestationstransformator 316 erfolgen, je nachdem, welche Spannung das elektrische Versorgungsnetz 314 an dem Netzverknüpfungspunkt 312 aufweist. Somit wird über diesen Netzverknüpfungspunkt 312 eine Bezugsleistung bezogen, die über einen Gleichrichter 318 gleichgerichtet wird und somit als Gleichstrom bzw. Gleichspannung den Ladeterminals 302 zugeführt wird. Alternativ kann auch eine Wechselspannung den Ladeterminals 302 zugeführt werden, wenn die Ladeterminals als gesteuerte Gleichrichter ausgebildet sind. Zweckmäßiger ist aber meist, als Ladeterminals Gleichstromsteller zu verwenden, wie dies auch in der schematischen Darstellung der Figur 3 für die Ladeterminals 302 angedeutet ist.

Jedes Ladeterminal 302 besteht nicht nur aus dem symbolisch dargestellten Gleichstromsteller, sondern beinhaltet auch einige Steuerintelligenz. Somit kann jedes Ladeterminal 302 den Ladezustand des angeschlossenen Elektrofahrzeugs 304 beurteilen, die Art des Elektrofahrzeugs 304 beurteilen und ggf. auch einen Ladewunsch des Fahrers des Elektrofahrzeugs berücksichtigen, insbesondere ob schnell oder langsam geladen werden soll.

Aus diesen Informationen kann jedes Ladeterminal 302 einen Ladeablauf bestimmen und auch einen Teilladeablauf des Ladeablaufs bestimmen. Ein solcher Teilablauf kann immer wieder von neuem bestimmt werden, z.B. alle 5 Minuten für einen Zeitraum von 5 Minuten. Diese Teilabläufe können dann einer Ladestationssteuerung 320 mitgeteilt werden.

Die Ladestationssteuerung 320 kann dann beurteilen, ob eine Erhöhung der Bezugsleistung über die anfängliche Entnahmebegrenzung erforderlich ist. Falls es erforderlich ist, kann sie überprüfen, ob eine Erhöhung möglich ist. Dazu kann eine Kommunikation mit einer Netzbetriebsführung 330 durchgeführt werden. Die Netzbetriebsführung 330 kann der Netzbetriebsführung 230 der Figur 2 entsprechen. Eine Überprüfung, ob eine anfängliche Entnahmebegrenzung überschritten werden kann, kann so durchgeführt werden, wie besonders im Zusammenhang mit Figur 2 beschrieben wurde.

Abhängig davon kann die Ladestationssteuerung 320 die Ladeterminals 302 ansteuern, insbesondere ihnen eine Begrenzung vorgeben und/oder den Gleichrichter 318 ansteuern, der in diesem Fall als aktiver Gleichrichter ausgebildet sein kann.

Es kommt auch in Betracht, dass die Ladestation 300 und damit besonders ihre Ladestationssteuerung 320 zunächst Informationen über eine Überlast, also besonders ein Leistungsüberangebot erhalten kann und davon abhängig eine Erhöhung der anfänglichen Entnahmebegrenzung vorsieht. Abhängig davon kann dann eine Ansteuerung der Ladeterminals 302 erfolgen bzw. eine Begrenzung der Ladeterminals 302 entsprechend hoch eingestellt werden. Ebenfalls kann abhängig davon der Gleichrichter 318 bzw. aktive Gleichrichter gesteuert bzw. begrenzt werden.

## Patentansprüche

1. Verfahren zum Betreiben einer Ladestation (211, 221, 300) zum Laden von Elektrofahrzeugen (304), wobei
- die Ladestation (211, 221, 300) an einem Netzverknüpfungspunkt (212, 222, 312) an ein elektrisches Versorgungsnetz (200, 314) angeschlossen ist,
- das elektrische Versorgungnetz (200, 314) wenigstens ein Verteilnetz (210, 220) und wenigstens einen hierarchisch über dem Verteilnetz (210, 220) liegenden höheren Netzabschnitt (202) aufweist, und
- der Netzverknüpfungspunkt (212, 222, 312) an das Verteilnetz (210, 220) angeschlossen ist, wobei
- die Ladestation (211, 221, 300) als Bezugsleistung aus dem elektrischen Versorgungsnetz (200, 314) elektrische Leistung bezieht,
- die Bezugsleistung an dem Netzverknüpfungspunkt (212, 222, 312) in ihrer Höhe durch eine anfängliche Entnahmebegrenzung auf eine anfängliche Leistungsgrenze begrenzt ist, um eine Übertragungsleistung, die in wenigstens einem Netzzweig des elektrischen Versorgungsnetzes (200, 314) übertragen wird, zu begrenzen, und
- die Bezugsleistung bei Bedarf über die anfängliche Entnahmebegrenzung erhöht wird, wenn die Begrenzung der Übertragungsleistung in dem wenigstens einen Netzzweig gewährleistet ist.

2. Verfahren nach Anspruch 1, **dadurch gekennzeichnet, dass**
die anfängliche Entnahmebegrenzung von extern empfangen wird, insbesondere durch einen Netzbetreiber vorgegeben wird.

3. Verfahren nach Anspruch 1 oder 2, **dadurch gekennzeichnet, dass**
- die Bezugsleistung bei Bedarf über die anfängliche Entnahmebegrenzung erhöht wird, wenn
- die Begrenzung der Übertragungsleistung in dem wenigstens einen Netzzweig (210, 220) durch eine Leistungsumverteilung im elektrischen Versorgungsnetz (200, 314) erreicht werden kann, und/oder
- die Übertragungsleistung in dem wenigstens einen Netzzweig durch die oder eine andere Leistungsumverteilung im elektrischen Versorgungsnetz (200, 314) verringert werden kann.

4. Verfahren nach einem der Ansprüche 1 bis 3, **dadurch gekennzeichnet, dass**
- die Bezugsleistung bei Bedarf über die anfängliche Entnahmebegrenzung erhöht wird, wenn in einem Lastflusspfad zur Ladestation (211, 221, 300) wenigstens ein regenerativer Einspeiser (224, 226) Leistung einspeist, wobei insbesondere
- die Bezugsleistung in Abhängigkeit der in dem Lastflusspfad eingespeisten Leistung erhöht wird.

5. Verfahren nach einem der vorstehenden Ansprüche, **dadurch gekennzeichnet, dass**
- die Bezugsleistung bei Bedarf über die anfängliche Entnahmebegrenzung erhöht wird, wenn in einem bzw. dem Lastflusspfad zur Ladestation (211, 221, 300) wenigstens ein bzw. der regenerative Einspeiser Blindleistung einspeist, und insbesondere
- die Bezugsleistung in Abhängigkeit der in dem Lastflusspfad eingespeisten Blindleistung erhöht wird.

6. Verfahren nach einem der vorstehenden Ansprüche, **dadurch gekennzeichnet, dass**
- über wenigstens ein Bewertungskriterium geprüft wird, ob die Begrenzung der Übertragungsleistung in dem wenigstens einen Netzzweig gewährleistet ist, wobei
- zum Prüfen über das wenigstens eine Bewertungskriterium wenigstens eine Bewertungsinformation verwendet wird und die Ladestation (211, 221, 300) die Bewertungsfunktion
- von einem Netzbetreiber erhält,
- aus Messungen erhält, insbesondere aus Messungen einer vorherrschenden Windgeschwindigkeit und/oder aus Messungen einer vorherrschenden Sonneneinstrahlung,
- als wenigstens ein Signal von einem benachbarten und/oder an den Lastflusspfad angeschlossenen Windpark erhält und/oder
- als wenigstens ein Signal von einer benachbarten und/oder an den Lastflusspfad angeschlossenen Photovoltaik-Anlage (226) erhält.

7. Verfahren nach einem der vorstehenden Ansprüche, **dadurch gekennzeichnet, dass**
um die Bezugsleistung bei Bedarf über die anfängliche Entnahmebegrenzung zu erhöhen, eine Lastumverteilung im elektrischen Versorgungsnetz (200, 314) durchgeführt oder berücksichtigt wird, bei der von wenigstens einem dezentralen Einspeiser erzeugte Leistung, oder ein Teil davon, der Ladestation (211, 221, 300) über das Verteilnetz (210, 220) zugeführt wird, ohne Übertragung über den höheren Netzabschnitt, insbesondere von einer Windenergieanlage (100, 224), einem Windpark und/oder einer Photovoltaik-Anlage (226) erzeugte Leistung.

8. Verfahren nach einem der vorstehenden Ansprüche, **dadurch gekennzeichnet, dass**
die Ladestation (211, 221, 300) ein Erhöhungssignal erzeugt und ausgibt, das einen Wert oder zeitlichen Werteverlauf angibt, um den die Bezugsleistung über die anfängliche Entnahmebegrenzung erhöht werden kann.

9. Verfahren nach einem der vorstehenden Ansprüche, **dadurch gekennzeichnet, dass**
- die Ladestation (211, 221, 300) mehrere Ladeterminals (302) aufweist,
- jedes Ladeterminal (302) zum Laden eines Elektrofahrzeugs (304) vorbereitet ist,
- jedes Ladeterminal (302) einen Ladeablauf zum Laden des jeweils angeschlossenen Elektrofahrzeugs (304) vorausplant, zumindest einen Teilablauf davon,
- aus den Ladeabläufen aller Ladeterminals (302), bzw. dem jeweiligen Teilablauf, ein Bezugsleistungsbedarf ermittelt wird und
- für den Bezugsleistungsbedarf geprüft wird, ob er die anfängliche Entnahmebegrenzung einhält, oder die Bezugsleistung über die anfängliche Entnahmebegrenzung erhöht werden muss, um den Bezugsleistungsbedarf zu decken.

10. Ladestation (211, 221, 300) zum Laden von Elektrofahrzeugen (304), wobei
- die Ladestation (211, 221, 300) an einem Netzverknüpfungspunkt (212, 222, 312), an ein elektrisches Versorgungsnetz (200, 314) angeschlossen ist,
- das elektrische Versorgungnetz (200, 314) wenigstens ein Verteilnetz (210, 220) und wenigstens einen hierarchisch über dem Verteilnetz (210, 220) liegenden höheren Netzabschnitt aufweist, und
- der Netzverknüpfungspunkt (212, 222, 312) an das Verteilnetz (210, 220) angeschlossen ist, wobei
- die Ladestation (211, 221, 300) dazu vorbereitet ist, als Bezugsleistung aus dem elektrischen Versorgungsnetz (200, 314) elektrische Leistung zu beziehen,
- die Bezugsleistung an dem Netzverknüpfungspunkt (212, 222, 312) in ihrer Höhe durch eine anfängliche Entnahmebegrenzung auf eine anfängliche Leistungsgrenze begrenzt ist, um eine Übertragungsleistung, die in wenigstens einem Netzzweig des elektrischen Versorgungsnetzes (200, 314) übertragen wird, zu begrenzen, und
- eine Steuerungseinrichtung vorgesehen ist, die dazu vorbereitet ist, eine Leistungsentnahme aus dem elektrischen Versorgungsnetz (200, 314) so zu steuern, dass
- die Bezugsleistung bei Bedarf über die anfängliche Entnahmebegrenzung erhöht wird, wenn die Begrenzung der Übertragungsleistung in dem wenigstens einen Netzzweig gewährleistet ist.

11. Ladestation (211, 221, 300) gemäß Anspruch 10, **dadurch gekennzeichnet, dass** sie dazu eingerichtet ist, insbesondere, dass die Steuerungseinrichtung dazu eingerichtet ist, ein Verfahren gemäß einem der Ansprüche 1 bis 9 auszuführen.
